# EUROPÄISCHE PATENTANMELDUNG

(11) **EP 0 734 190 A1**
(43) Veröffentlichungstag der Anmeldung: **25.09.1996**
(21) Anmeldenummer: 95104217.5
(22) Anmeldetag: 22.03.1995
(51) Int. Cl.: H04Q 7/20

(54) **Funksystem zum Anschliessen von Teilnehmerstationen an ein Fernmeldenetz**

(71) Anmelder: SIEMENS AKTIENGESELLSCHAFT, 80333 München (DE)
(72) Erfinder: Lechner, Robert, A-3171 Böheimkirchen (AT)

(57) **Zusammenfassung**

RITL-System (RadioInTheLoop) mit ortsfesten Teilnehmeranschlußeinheiten (RNT) und teilnehmernah angeordneten Funkbasisstationen (RBS) zur Bedienung jeweils einer Gruppe von Teilnehmerstationen (TSt). Die Steuerung (RDU) des Funksystems ist im Nahbereich der Ortsvermittlungsstelle (LE) des Festnetzes angeordnet und über in redundanter Lastteilung arbeitenden Übertragungsstrecken (ÜB) erreichbar. Zu jeder Teilnehmerstation kann eine Verbindung über mindestens eine Basisstation der wenigstens zwei Gruppen und jede der beiden Übertragungsstrecken hergestellt werden, was zu einem hohen Maß an Sicherheit gegen Totalausfall und Verbindungsverlust führt.

## Beschreibung

Die Erfindung betrifft ein Teilnehmeranschlußnetz gemäß dem Oberbegriff des Patentanspruchs 1.

Ein solches Teilnehmeranschlußnetz umfaßt demnach ein Funksystem zur Herstellung der Anschlußverbindungen, zu dem ortsfeste teilnehmernah angeordnete, jeweils zur Bedienung mehrerer Teilnehmerstationen ausgelegte Basisstationen gehören, die mit ortsfesten Teilnehmeranschlußeinheiten und/oder mit mobilen Teilnehmerendgeräten in Funkverbindung treten können.

Für ein solches Teilnehmeranschlußnetz werden auch die Bezeichnungen RLL (Radio Local Loop) oder RITL (Radio In The Loop) verwendet.

Es handelt sich hier also um ein Teilnehmeranschlußnetz, bei dem zumindest ein Teil der Teilnehmeranschlußleitung durch eine Funkübertragungsstrecke ersetzt ist.

Ein bekanntes System mit einem Anschlußnetz dieser Art (siehe z.B. Ericsson Review Nr. 2, 1994, Seiten 84 bis 92) arbeitet nach dem DECT-Standard für Schnurlos-Telefonverbindungen, wonach unter anderem jeder Teilnehmer wahlfrei über eine Mehrzahl von Basisstationen Zugriff zum System hat und wonach auch ein Übergang (handover) von einer Basisstation zur anderen möglich ist, ohne daß bestehende Verbindungen beeinträchtigt oder gar unterbrochen werden. Letzteres ist insbesondere im Zusammenhang mit mobilen Teilnehmerendgeräten von Bedeutung, wenn die Teilnehmer sich aus dem Funkbereich einer Basisstation heraus in den Funkbereich einer benachbarten Basisstation bewegen.

Die Basisstationen solcher Teilnehmeranschlußnetze sind mit zentralen Systemeinrichtungen und über diese mit einer Fernmeldeortsvermittlungsstelle verbunden. Im Falle des genannten bekannten Systems sind die Basisstationen teilnehmernah, d.h. in Funkreichweite in der Großenordnung von 1 km am Ort einer zentralen Steuereinheit angeordnet. Zwischen dieser zentralen Steuereinheit und der Fernmeldeortsvermittlungsstelle bestehen 2Mbit/s-Übertragungsstrecken.

Bei Ausfall einer Basisstation oder einer Übertragungsstrecke muß sichergestellt sein, daß dadurch einzelne Teilnehmeranschlüsse nicht vollständig von der Möglichkeit Fernmeldeverkehr abzuwickeln, ausgeschlossen sind.

Bei dem bekannten Anschlußnetz würde ein Ausfall der zentralen Steuereinheit allerdings zu einem Totalausfall der an sie angeschlossenen Teilnehmeranschlüsse führen.

Dem könnte zwar dadurch begegnet werden, daß sowohl die Basisstationen als auch die zentrale Steuereinheit und damit auch die mit der Fernmeldevermittlungsstelle verbindende Übertragungsstrecken gedoppelt würden, abgesehen vom Aufwand wäre dies jedoch keine günstige Lösung, da das Retten bestehender Verbindungen bei einem Ausfall in Form des erwähnten handover nicht möglich wäre.

Hinzu käme, daß um ein solches gedoppeltes Netz betreiben zu können, die Teilnehmer mit zwei Systemkennungen arbeiten müßten, was zur Verlängerung der Verbindungsaufbauzeit und zur Erhöhung des administrativen Aufwands führen würde.

Die Aufgabe der Erfindung besteht darin, ein Teilnehmeranschlußnetz der im Oberbegriff des Patentanspruchs 1 angegebenen Art dahin auszugestalten, daß bei Ausfall von durch eine Mehrzahl von Teilnehmern genutzten Systemteilen, es lediglich zu einem Absinken der Verkehrsgüte oder zu Verkehrsverlusten kommt, nicht dagegen Totalausfälle hinzunehmen sind, und daß bestehende Verbindungen soweit wie möglich gerettet werden können.

Diese Aufgabe wird mit Hilfe der im Kennzeichen des Patentanspruchs 1 angegebenen Merkmale gelöst.

Aufgrund der Anordnung der Funksteuereinheit, deren Intelligenz Voraussetzung für die Möglichkeit der freizügigen Wahl einer Basisstation durch Teilnehmerstationen sowie des erwähnten handover ist, im Nahbereich der Ortsvermittlungsstelle, ferner aufgrund der Bildung voneinander unabhängiger Gruppen von Basisstationen, sowie aufgrund von in Lastteilung arbeitenden Übertragungssystemen zwischen diesen Gruppen von Basisstationen und der Funksteuereinheit am Ort der Ortsvermittlungsstelle wird beim erfindungsgemäßen Teilnehmeranschlußnetz weder der Ausfall einer Basisstation oder einer ganzen Gruppe von Basisstationen durch Ausfall der entsprechenden gruppenbildenden Einrichtung noch der Ausfall eines Übertragungssystems auch im ungünstigsten Fall dazu führen, daß eine Verbindung zu bestimmten Teilnehmerstationen nicht mehr herstellbar ist, es wird vielmehr lediglich zum Entstehen von Verkehrsverlusten kommen. Bestehende Verbindungen werden in vielen Fällen gerettet werden können, indem ein Übergang zu einer Basisstation einer anderen Gruppe bzw. zu einer anderen Übertragungsstrecke in Form eines handover möglich ist.

Weitere Ausgestaltungen der Erfindung sind Gegenstand von Unteransprüchen.

Gemäß Anspruch 2 erfolgt die Gruppenbildung der Basisstationen mittels teilnehmerseitig an eine der erwähnten Übertragungsstrecken angeschlossenen Konzentratoren. Bei Ausfall eines dieser Konzentratoren und damit der daran angeschlossenen Basisstationen kann zumindest ein Teil des Verkehrs zu den davon betroffenen Teilnehmern über Basisstationen einer anderen Gruppe und damit eines anderen dieser Konzentratoren abgewickelt werden.

Gemäß Anspruch 3 erfolgt die Informationsübertragung über die Übertragungsstrecken mit derselben Bitrate wie sie bei der Funkübertragung zwischen Teilnehmerstationen und Basisstationen vorliegt. In der Praxis ist dies eine Bitrate von 32 Kbit/s pro Teilnehmer mit der Folge, daß auf zwei 2Mbit/s-Übertragungsstrecken jeweils 647 Zeitkanäle übertragen werden können. Eine Umsetzung auf eine Bitrate von 64 Kbit/s pro Teilnehmer findet erst beim Übergang von der Funksteuereinheit, die im Nahbereich der Ortsvermittlungsstelle angeordnet ist, zu dieser Ortsvermittlungsstelle statt, im Gegensatz zu dem vorerwähnten bekannten Anschlußnetz, bei dem diese Umsetzung schon im teilnehmernahen Bereich vorgenommen wird.

Gemäß Anspruch 4 sind zumindest einzelne der Basisstationen über ISDN-Leitungsschnittstellen und über eine Zweidrahtleitung an die erwähnten Konzentratoren angeschlossen.

Gemäß Anspruch 5 ist die Funksteuereinheit über dieselbe Art von Schnittstelle mit der Ortsvermittlungsstelle verbunden, wie Anschlußeinheiten für drahtgebundene Teilnehmer, so daß bezüglich dieses Anschlusses bei der Ortsvermittlungsstelle keine besonderen Vorkehrungen zu treffen sind.

In weiteren, Verfahren zum Betrieb des erfindungsgemäßen Teilnehmeranschlußnetzes betreffenden Ansprüchen sind Steuerungsabläufe angegeben, die bei bestimmten Ausfallsituationen vorteilhaft zur Anwendung kommen bzw. die zur Priorisierung bestimmter Teilnehmer in Ausfallsituationen führen.

Nachstehend wird die Erfindung anhand eines Ausführungsbeispiels unter Bezugnahme auf eine Figur näher erläutert.

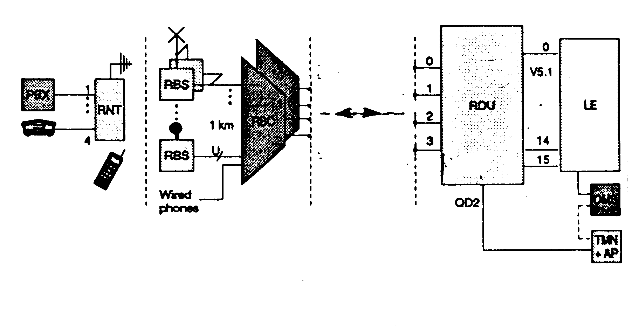

Die Figur zeigt im wesentlichen den Funkteil des Anschlußnetzes einer Fernmelde- insbesondere Fernsprechortsvermittlungsstelle LE. Die dargestellte Gesamtanordnung ist gegliedert in einen Vermittlungsstellenbereich VStB, zu dem die erwähnte Ortsvermittlungsstelle LE gehört, in einen Übertragungsbereich ÜB, in einen Anschlußbereich ANB und in einen Teilnehmerbereich TB. Als Teilnehmer können, wie in TB dargestellt, Nebenstellenanlagen PBX oder private Teilnehmerstationen TSt vorgesehen sein, die über Zweidrahtleitungen an ortsfeste Teilnehmeranschlußeinheiten RNT angeschlossen sind. Im dargestellten Fall weist eine solche Teilnehmeranschlußeinheit Schnittstellen für den Anschluß von vier Zweidrahtleitungen auf. Zwischen solchen Teilnehmeranschlußeinheiten RNT und Funkbasisstationen RBS, die dem Anschlußbereich ANB zugehören, besteht eine Funkverbindung, die eine Entfernung in der Größenordnung von 1 km überbrückt. Die Teilnehmeranschlußeinheiten sind hierzu mit Richtantennen ausgestattet, an den Basisstationen sind eine Mehrzahl von jeweils nur einen Teil das Erfassungsbereiches abdeckenden Sektorantennen angeordnet.

Es kommen auch mobile Teilnehmerstationen HY in Frage, die direkt mit den erwähnten Basisstationen in Funkverbindung treten können.

Die Basisstationen RBS sind in Gruppen, im dargestellten Fall in zwei Gruppen, zusammengefaßt, indem sie über Zweidrahtleitungen an Einrichtungen RBC1 oder RBC2 angeschlossen sind. Diese Einrichtungen konzentrieren jeweils den von den angeschlossenen Basisstationen stammenden Verkehr auf eine Übertragungsstrecke, auf der Informationsübertragungen mit einer Bitrate von 2 Mbit/s erfolgen. Vorzugsweise handelt es sich bei diesen Übertragungsstrecken um Richtfunkstrecken. Die Übertragungsstrecken können jedoch auch als Lichtleiterstrecken und in Fällen, in denen nur relativ kurze Entfernungen bis zur Ortsvermittlungsstelle LE zu überbrücken sind, durch Kupferleitungen realisiert sein.

Im Nahbereich der Ortsvermittlungsstelle LE, also in dem in der Figur mit VStB bezeichneten Bereich ist eine Funksteuereinheit RDU angeordnet, die teilnehmerseitig wenigstens zwei Schnittstellen für den Anschluß von wenigstens zwei der Übertragungsstrecken in den genannten Technologien aufweist.

Zwischen der Funksteuereinheit RDU und der Ortsvermittlungsstelle LE selbst bestehen über eine V5-Schnittstelle Zweidrahtleitungsverbindungen.

Aufgrund der Anordnung und Antennenausrichtung der Basisstationen RBS und der Arbeitsweise der Funksteuereinheit RDU kann jede Teilnehmerstation Basisstationen wenigstens zweier Gruppen dieser Basisstationen erreichen. Es ist daher eine redundante Lastteilung der Basisstationen, der Einrichtung RBC und der Übertragungsstrecken möglich. Dieser Betrieb wird durch die zentrale Funksteuereinheit RDU in der Weise unterstützt, daß diese von Teilnehmerstationen kommende abgehende Rufe unabhängig davon akzeptiert, über welche Gruppe von Basisstationen diese an sie gelangen. Umgekehrt reicht die Funksteuereinheit an die Teilnehmerstationen gerichtete ankommende Rufe an Basisstationen sämtlicher in Frage kommender Gruppen weiter, bewirkt eine Verbindungsherstellung aber dann nur über eine solcher Basisstationen, von der aus die besten Funkübertragungsbedingungen zu der betreffenden Teilnehmerstation bestehen.

Das beschriebene Teilnehmeranschlußnetz arbeitet nach dem DECT-Standard, wonach während bestehender Verbindungen unterbrechungsfrei sowohl ein Wechsel von einem Funkkanal zu einem anderen innerhalb derselben Funkzelle, also des Erfassungsbereichs ein und derselben Basisstation, als auch ein unterbrechungsfreier Wechsel auf einen Funkkanal der Funkzelle einer benachbarten Basisstation möglich ist. Zu solchen Wechseln kommt es normalerweise dann, wenn die Empfangsbedingungen sich zu ungünstigeren Werten hin verändern, was insbesondere dann der Fall sein wird, wenn sich die Teilnehmer mit mobilen Endgeräten beim Telefonieren bewegen.

Von dieser Möglichkeit eines Wechsels der Basistation wird beim erfindungsgemäßen Teilnehmeranschlußnetz auch dann Gebrauch gemacht, wenn eine Basisstation ausfällt. Durch die Teilnehmerendgeräte, von denen aus in dieser Situation eine aktive Fernmeldeverbindung bestand, wird in diesem Fall über eine andere der erreichbaren Basisstationen RBS an die zentrale Funksteuereinheit RDU eine Aufforderung zur Umschaltung auf diese Basisstation gerichtet. Eine solche Umschaltung wird allerdings nur dann durchgeführt, wenn über die betreffende erreichbare Basisstation ein freier Funkkanal gefunden werden kann, andernfalls geht die Verbindung zu Verlust.

Es ist ferner vorgesehen, die Übertragungsstrecken zwischen den Basisstationen und der zentralen Funksteuereinheit, die erwähnten Konzentratoren RBC, sowie die Schnittstellen der zentralen Funksteuereinheit RDU für den Anschluß der Übertragungsstrecken von der zentralen Funksteuereinheit aus zu überwachen. Im Falle einer Betriebsunterbrechung einer der genannten überwachten Anschlußnetzteile wird dann die davon betroffene Basisstation veranlaßt, ihren Betrieb einzustellen. Dies wiederum ist Anlaß für die Teilnehmeranschlußeinheiten RNT oder für die mobilen Teilnehmerendgeräte HY, von denen aus eine aktive Verbindung bestand, wie vorstehend erläutert über eine andere erreichbare Basisstation an die zentrale Funksteuereinheit eine Aufforderung zur Umschaltung zu richten.

Wenn nicht nur eine Basisstation, sondern einer der Konzentratoren RBC oder eine der Übertragungsstrecken ausfällt, werden bei einer Umschaltung die davon betroffenen in redundanter Lastteilung arbeitenden Teile unter Umständen mit einem Ausmaß an Verkehr belastet, das sie nicht bewältigen können. Es kann daher vorgesehen werden, daß in den Teilnehmeranschlußeinheiten RNT für einzelne der angeschlossenen Teilnehmerendgeräte festgelegt ist, daß von diesen Endgeräten aus bei einem sie betreffenden Ausfall der überwachten Teile des Funksystems keine Aufforderung zum Aufbau einer Ersatzverbindung ausgehen kann, womit eine Priorisierung der nicht von einer solchen Festlegung betroffenen Teilnehmer gegeben ist.

Um sicherzustellen, daß bestehende Verbindungen solcher priorisierten Teilnehmer bei einer ausfallbedingten Umschaltung auch tatsächlich gerettet werden, kann vorgesehen sein, daß von den betreffenden Endgeräten aus dann, wenn kein freier Nutzkanal in den Netzteilen, auf die die Umschaltungvorgenommen worden ist, gefunden werden kann, über den Funksignalisierungskanal einer beliebigen erreichbaren Basisstation eine Prioritätsanforderung an die zentrale Funksteuerung RDU gerichtet wird, woraufhin diese eine bestehende nichtpriorisierte Verbindung auslöst und damit die Möglichkeit einer Weiterführung der Verbindung des priorisierten Teilnehmers ermöglicht.

## Patentansprüche

1. Teilnehmeranschlußnetz für den Anschluß von Teilnehmerstationen an eine Fernmeldeortsvermittlungsstelle, das ein Funksystem zur Herstellung der Anschlußverbindungen umfaßt, zu dem ortsfeste teilnehmernah angeordnete, jeweils zur Bedienung mehrerer Teilnehmerstationen ausgelegte Basisstationen gehören, die mit ortsfesten Teilnehmeranschlußeinheiten und/oder mit mobilen Teilnehmerendgeräten in Funkverbindung treten können,
**gekennzeichnet**, durch folgende Merkmale:
a) eine der Steuerung des Funksystems dienende zentrale Funksteuereinheit (RDU) ist im Nahbereich der Ortsvermittlungsstelle (LE) angeordnet
b)die Funksteuereinheit (RDU) weist teilnehmerseitig wenigstens zwei Schnittstellen für den Anschluß von in Lastteilung arbeitenden Übertragungsstrecken zur Verbindung mit jeweils einer voneinander unabhängiger Gruppen von Basisstationen (RBS) auf,
c) aufgrund der Anordnung und Antennenausrichtung der Basisstationen kann jede Teilnehmerstation Basisstationen wenigstens zweier solcher Gruppen erreichen
d) wobei die zentrale Funksteuereinheit (RDU) von Teilnehmerstationen abgehende Rufe über jede der von diesen erreichbare Basisstation unterschiedlicher Gruppen akzeptiert und an die Teilnehmerstationen gerichtete ankommende Rufe über jede solcher Basisstationen weiterleitet, eine Verbindungsherstellung dann aber nur über eine solcher Basisstationen bewirkt.

2. Teilnehmeranschlußnetz nach Anspruch 1,
**dadurch gekennzeichnet**, daß
die Gruppenbildung der Basistationen mittels Konzentratoren (RBC) erfolgt, an die teilnehmerseitig die Basisstationen (RBS) jeweils einer Gruppe und vermittlungsseitg jeweils eine Übertragungsstrecke angeschlossen ist.

3. Teilnehmeranschlußnetz nach einem der Ansprüche 1 oder 2
**dadurch gekennzeichnet**, daß
die Informationsübertragung über die Übertragungsstrecken mit derselben Bitrate erfolgt wie sie bei der Funkübertragung zwischen Teilnehmerstation und Basisstationen (RBS) vorliegt.

4. Teilnemeranschlußnetz, nach einem der Ansprüche 1 bis 3
**dadurch gekennzeichnet**, daß
zumindest einzelne der Basisstaionen (RBS) über ISDN- Leitungsschnittstellen (U-Schnittstellen) und über eine Zweidrahtleitung an die Konzentratoren angeschlossen sind.

5. Teilnehmeranschlußnetz nach einem der Ansprüche 1 bis 4,
**dadurch gekennzeichnet**, daß
die Funksteuereinheit (RDU) über dieselbe Art von Schnittstelle mit der Ortsvermittlungsstelle verbunden ist wie Anschlußeinheiten für drahtgebundene Teilnehmer.

6. Verfahren zum Betrieb eines Teilnehmeranschlußnetzes nach einem der Ansprüche 1 bis 5,
**daurch gekennzeichnet**, daß bei Ausfall einer Basisstation (RBS) durch Teilnehmeranschlußeinheiten (RNT)oder durch mobile Teilnehmerendgeräte (HY) der Teilnehmerstationen, von denen aus eine aktive Fernmeldeverbindung bestand, über eine andere der erreichbaren Basisstationen (RBS) an die zentrale Funksteuereinheit (RDU) eine Aufforderung zur Umschaltung auf diese Basisstation gerichtet wird, wozu sich dieselben Meldungs- und Steuervorgänge abspielen wie bei einem Ortswechsel eines mobilen im aktiven Gesprächszustand befindlichen Teilnehmerendgeräts (HY) in den Erfassungsbereich einer anderen bessere Funkübertragungsbedingungen bietenden Basisstation, daß aber eine solche Umschaltung nur dann durchgeführt wird wenn über die betreffende Basisstation ein freier Funkkanal gefunden werden kann.

7. Verfahren nach Anspruch 6,
**dadurch gekennzeichnet**, daß
die Übertragungsstrecken zwischen den Basisstationen (RBS) und der zentralen Funksteuereinheit (RDU), diese Konzentzratoren, sowie die Schnittstellen der zentralen Funksteuereinheit für den Anschluß der Übertragungsstrecken von der zentralen Funksteuereinheit (RDU) aus überwacht werden, daß bei Betriebsunterbrechung die davon betroffene Basisstation veranlaßt wird, ihren Betrieb einzustellen, woraufhin Teilnehmeranschlußeinheiten (RNT) oder mobile Teilnehmerendgeräte (HY), von denen aus eine aktive Fernmeldeverbindung bestand, veranlaßt werden, über eine andere der erreichbaren Basistationen (RBS) an die zentrale Funksteuereinheit (RDU) eine Aufforderung zur Umschaltung auf diese Basisstation zu richten, wozu sich dieselben Meldungs- und Steuerungsvorgänge abspielen wie bei einem Ortswechsel eines mobilen, im aktiven Zustand befindlichen Teilnehmerendgeräts in den Erfassungsbereich einer anderen, bessere Funkübertragungsbedingungen bietenden Basisstation.

8. Verfahren nach einem der Ansprüche 6 oder 7,
**dadurch gekennzeichnet**, daß
zur Priorisierung der Verbindungen bestimmter Teilnehmer in den Teilnehmeranschlußeinheiten (RNT) für einzelne der angeschlossenen Teilnehmerendgeräte einstellbar festgelegt ist, daß bei einem sie betreffenden Ausfalll der überwachten Teile des Funksystems von diesen Teilnehmerendgeräten keine Aufforderung zum Aufbau einer Ersatzverbindung ausgehen kann.

9. Verfahren nach Anspruch 8,
**dadurch gekennzeichnet**, daß
dann wenn priorisierte Teilnehmer keinen freien Nutzkanal finden, diese über den Funksignalisierungskanal einer beliebigen erreichbaren Basisstation (RBS) eine Prioritätsanforderung an die zentrale Funksteuerung (RDU) richten, woraufhin diese eine bestehende nichtpriorisierte Verbindung auslöst.
